Europäisches Patentamt

European Patent Office

Office européen des brevets

(19)

(11) EP 0 626 073 B1

(12) **FASCICULE DE BREVET EUROPEEN**

(45) Date de publication et mention
de la délivrance du brevet:
**02.10.1996 Bulletin 1996/40**

(21) Numéro de dépôt: **93905377.3**

(22) Date de dépôt: **09.02.1993**

(51) Int Cl.⁶: **G01S 15/52**, G01S 7/52

(86) Numéro de dépôt international:
**PCT/FR93/00133**

(87) Numéro de publication internationale:
**WO 93/16398 (19.08.1993 Gazette 1993/20)**

(54) **PROCEDE DE DETECTION DE CIBLE SOUS-MARINE AVEC DIVERSITE DE FREQUENCE**

Verfahren zur Detektion eines Unterwasserzieles unter Verwendung von Frequenzdiversität

PROCESS FOR FREQUENCY DIVERSITY DETECTION OF AN UNDERWATER TARGET

(84) Etats contractants désignés:
**DE GB NL**

(30) Priorité: **11.02.1992 FR 9201499**

(43) Date de publication de la demande:
**30.11.1994 Bulletin 1994/48**

(73) Titulaire: **THOMSON-CSF**
**75008 Paris (FR)**

(72) Inventeur: **DOISY, Yves**
**F-92402 Courbevoie Cédex (FR)**

(74) Mandataire: **Desperrier, Jean-Louis et al**
**THOMSON-CSF**
**SCPI**
**B.P. 329**
**50, rue Jean-Pierre Timbaud**
**92402 Courbevoie Cédex (FR)**

(56) Documents cités:
**EP-A- 0 093 057**        **US-A- 3 939 474**

- **PROCEEDINGS OF THE NATIONAL COMMUNICATIONS FORUM vol. 40, no. II, 1986, OAK BROOK, ILLINOIS US pages 1247 - 1252 N.M. BILGUTAY ET AL. 'Frequency agile minimum detector for detection and clutter rejection'**
- **NATO UNCLASSIFIED/ SACLANTCEN vol. 18, February 1976, LA SPEZIA IT P. DE HEERING 'Signal design for energy detection of a fluctuating target'**

**Description**

La présente invention a pour objet un procédé de détection de cible sous-marine à l'aide d'un sonar actif comprenant une antenne constituée d'une pluralité de transducteurs, qui utilise l'effet Doppler attaché au mouvement relatif de la cible et du sonar, et qui comprend une étape de formation de voies à partir des signaux desdits transducteurs, comme décrit par exemple dans la demande de brevet EP-A-0 093 057.

Il est connu, pour détecter avec un sonar une cible en mouvement, d'utiliser l'effet Doppler induit par le mouvement relatif du sonar et de la cible. Dans de tels procédés de l'art antérieur, on émet une impulsion de faible bande passante vis-à-vis du décalage Doppler, puis à la réception, on corrèle simultanément les signaux reçus par plusieurs copies de l'impulsion émise, décalées en fréquence. Chaque copie de corrélation correspond à un décalage Doppler différent possible. La meilleure corrélation est obtenue avec une copie présentant un décalage en fréquence sensiblement égal à celui provoqué par le mouvement de la cible. Ainsi, la corrélation par plusieurs copies et l'exploitation des signaux reçus permet de localiser une cible en distance et en azimuth, et de calculer sa vitesse radiale. Ce procédé est compatible avec les autres systèmes de traitement des signaux, en particulier avec ceux qui comprennent la constitution de voies de réception directives.

Ce procédé de l'art antérieur apporte une solution partielle au problème de la réverbération, qui peut provenir aussi bien du fond, que de la surface de la mer, ou encore des hétérogénéités du milieu marin. En effet, pour un sonar fixe, les échos correspondant à la réverbération n'ont pas de décalage Doppler; au contraire, les échos provenant de la réflexion sur une cible mobile sont affectés d'un décalage Doppler. Ainsi, si le spectre de l'impulsion émise est plus étroit que le décalage Doppler induit par le mouvement de la cible, la réverbération est fortement atténuée lors de la corrélation avec la copie associée au décalage Doppler de la cible.

Bien que ce procédé connu améliore considérablement la détection, il n'est pas encore pleinement satisfaisant. En particulier, il arrive souvent que le sonar soit porté ou tracté par un bâtiment qui lui-même se déplace, à une vitesse du même ordre de grandeur que celle de la cible. Le déplacement du bâtiment induit un décalage Doppler sur les impulsions réfléchies sur les cibles mobiles. Ce déplacement du bâtiment par rapport aux sources de réverbération induit aussi un décalage Doppler sur les impulsions réfléchies par les sources de réverbération, ce qui diminue l'efficacité du procédé connu décrit ci-dessus.

Pour surmonter les problèmes liés à un mouvement du sonar, il a été proposé, pour un sonar dans lequel l'antenne comprend un ensemble de transducteurs et est entraînée dans un mouvement de translation, de commuter les signaux de ces transducteurs, de façon à constituer une sous-antenne animée d'un mouvement fictif permettant de compenser le décalage Doppler apporté aux échos fixes par le mouvement de translation du sonar.

Toutefois, les procédés décrits ci-dessus ne permettent pas de résoudre de façon satisfaisante le problème de la réverbération. Celle-ci reste gênante, et par exemple lorsque la mer est agitée, peut conduire à des problèmes de détection.

La présente invention propose un procédé de détection de cibles mobiles à l'aide d'un sonar et utilisant l'effet Doppler, qui pallie ces inconvénients des systèmes connus. Elle permet de diminuer le niveau de réverbération, de façon importante. En outre, grâce à la présente invention, on améliore les autres performances du sonar, tant en ce qui concerne les performances contre le bruit, la résolution en distance, la tolérance du sonar par rapport aux accélérations du bâtiment porteur ou des cibles.

La présente invention présente un intérêt tout particulier lorsqu'elle est employée avec le procédé dans lequel on constitue une sous-antenne animée d'un mouvement fictif pour compenser le décalage Doppler apporté aux échos fixes par le mouvement du sonar.

La présente invention a pour objet un procédé de détection de cible sous-marine mobile à l'aide d'un sonar actif comprenant une antenne constituée d'une pluralité de transducteurs, le procédé selon l'invention utilise l'effet Doppler attaché au mouvement relatif de la cible et du sonar, et comprend une étape de formation de voies à partir des signaux desdits transducteurs, selon l'invention, le sonar émet une pluralité d'impulsions à différentes fréquences, et le traitement du signal comprend, outre l'étape de formation de voies, des étapes de détection cohérente pour chaque impulsion, et de regroupement de façon incohérente des résultats obtenus dans l'étape de détection cohérente.

Selon un mode de mise en oeuvre du procédé selon la présente invention, les fréquences des impulsions sont choisies de façon à ce que toute impulsion réfléchie sur une cible animée d'une vitesse extrême est hors de la plage de fréquence correspondant à la réverbération provenant de toute autre impulsion.

Selon un autre mode de mise en oeuvre du procédé, lesdites fréquences $f_0$, $f_1$, ... , $f_i$, $f_{i+1}$, ... ,$f_N$ des impulsions sont choisies de façon à vérifier les formules suivantes:

$$(1 + 2V_A/c)(1 + 2V_{max}/c)(f_i + b/2) \leq (1 - 2V_A/c)(f_{i+1} - b/2)$$

et

$$(1 + 2V_A/c)(f_i + b/2) \leq (1 - 2V_A/c)(1-2V_{min}/c)(f_{i+1} - b/2)$$

où:

b/2 est la largeur spectrale des impulsions,

VA la vitesse de déplacement du sonar,

c la célérité du son dans l'eau,

$-V_{min}$ la vitesse radiale minimale (par rapport au fond) des cibles susceptibles d'être détectées ($V_{min} > 0$);

$V_{max}$ la vitesse radiale maximale des cibles que l'on cherche à détecter ($V_{max} > 0$).

Selon un mode de mise en oeuvre du procédé de la présente invention, les impulsions de la pluralité d'impulsions sont émises simultanément.

Selon un autre mode de mise en oeuvre du procédé de la présente invention, les impulsions de la pluralité d'impulsions sont émises successivement.

Selon encore un mode de mise en oeuvre du procédé, l'étape de détection cohérente consiste à effectuer une corrélation des signaux reçus sur le sonar par des copies Doppler des différentes impulsions émises, chacune des dites copies Doppler définissant un canal fréquentiel.

Selon encore un autre mode de mise en oeuvre du procédé, l'étape de regroupement de façon incohérente des résultats obtenus dans l'étape de détection cohérente comprend une détection d'enveloppe, une compensation éventuelle des retards entre les impulsions émises, et une sommation des signaux des canaux fréquentiels ainsi traités et correspondant à une même vitesse radiale de la cible.

La détection d'enveloppe peut avantageusement être une détection quadratique.

Selon un autre mode de mise en oeuvre du procédé de l'invention, l'étape de formation de voies comprend la commutation des signaux des tranducteurs de ladite antenne pour obtenir au moins une sous-antenne animée d'un mouvement fictif permettant de compenser le décalage Doppler apporté aux échos fixes par un mouvement du sonar.

Les caractéristiques et avantages de la présente invention ressortiront mieux de la description suivante, donnée uniquement à titre d'exemple et en référence aux dessins annexés, où:

- la figure 1 montre un schéma de réception d'une cible et d'une cellule de réverbération;
- la figure 2 montre un schéma de principe de la réverbération;
- la figure 3 illustre le choix des fréquences selon la présente invention;
- la figure 4 est un schéma synoptique du traitement du signal dans un dispositif mettant en oeuvre la présente invention;
- la figure 5 est un schéma illustrant la combinaison de l'invention avec le procédé connu de sous-antenne glissante.

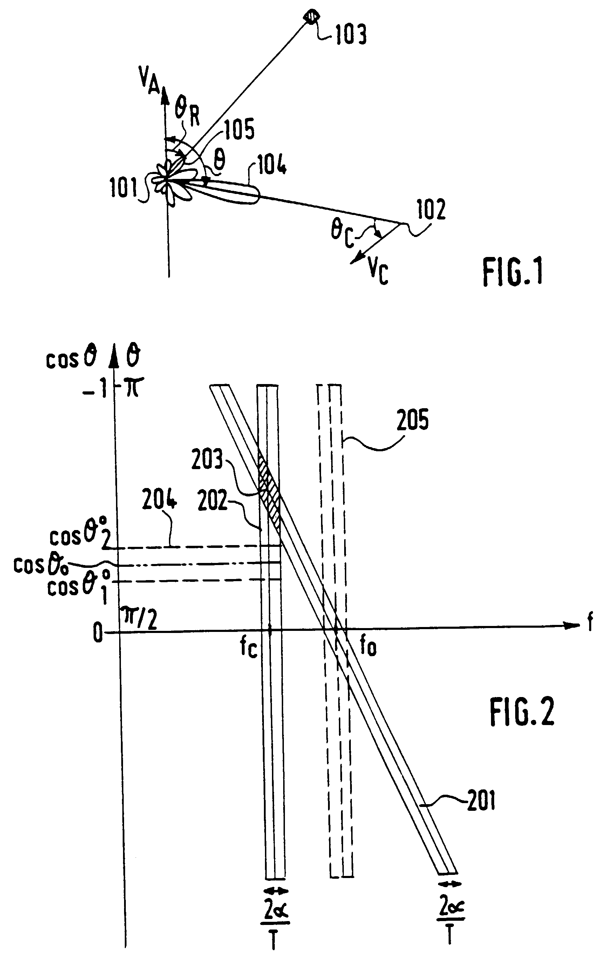

La figure 1 montre un schéma d'une cible et d'une cellule de réverbération. Un sonar 101 se déplace à une vitesse $V_A$ par rapport à la mer. Le sonar reçoit l'écho d'une impulsion émise réfléchie sur une cible 102 qui se trouve dans un gisement θ, correspondant à la direction du lobe principal 104 d'une voie de réception.

La cible 102 se déplace à une vitesse $V_C$ par rapport à la mer, et cette vitesse $V_C$ fait avec l'axe du lobe principal 104 de la voie de réception un angle $θ_C$.

Sur la figure 1 est aussi représentée une cellule de réverbération 103, dans un gisement $θ_R$ par rapport au sonar. Les impulsions réfléchies par cette source de réverbération arrivent sur le sonar dans un lobe secondaire de la voie de réception représentée.

Une cible animée d'une vitesse radiale $V_R$ par rapport au sonar réfléchit une impulsion émise par le sonar à la fréquence $f_0$ avec une fréquence décalée par effet Doppler et qui vaut

$$(1 + 2V_R/c)f_0$$

où c représente la célérité du son dans l'eau.

Ainsi, en référence à la figure 2, une impulsion émise par le sonar 101 à une fréquence $f_o$ est réfléchie par la cellule de réverbération 103 à une fréquence qui vaut:

$$(1 + 2\frac{V_A \cos θ_R}{c}) f_0$$

et cette même impulsion est réfléchie par la cible 102 à une fréquence qui vaut:

$$(1 + 2\frac{V_A \cos θ}{c})(1 + 2\frac{V_C \cos θ_C}{c}) f_0$$

La figure 2 illustre un schéma de principe de réverbération. On suppose que le sonar émet une impulsion centrée sur la fréquence $f_0$, modulée en amplitude et d'une durée T. Cette impulsion a une largeur spectrale qui est de l'ordre de 1/T, et qui en fait dépend de la modulation d'amplitude utilisée. Par exemple, pour une modulation en $\cos^2$, la largeur

spectrale est de l'ordre de 2/T. Plus généralement, la largeur spectrale vaut $\alpha/T$, et $\alpha$ est compris entre 1 et 2.

La figure 2 est un diagramme sur lequel on a porté en abscisses la fréquence f et en ordonnées les valeurs du cosinus du gisement $\theta$. On a porté sur la figure 2 la réverbération 201 provenant d'une impulsion de fréquence $f_0$ et de largeur spectrale $\alpha/T$. Comme on l'a vu plus haut, la réverbération dans le gisement $\theta_R$ de la fréquence $f_0$ se traduit par une fréquence:

$$(1 + 2 \frac{V_A \cos \theta_R}{c}) f_0$$

ce qui explique l'allure linéaire du spectre de réverbération 201.

On se place dans le cas où l'on effectue une corrélation à l'arrivée par des impulsions "dopplerisées", comme dans le procédé de l'art antérieur. Dans un tel cas, on corrèle les signaux reçus par une impulsion qui est une copie de l'impulsion émise $f_0$ et qui a la même largeur spectrale $\alpha/T$, et qui est centrée sur la fréquence $f_c$. On récupère ainsi les signaux réfléchis dans une bande de fréquence appelée canal fréquentiel 202 et comprise entre $f_c - \alpha/T$ et $f_c + \alpha/T$. La zone hachurée 203 qui constitue l'intersection du spectre de réverbération 201 et du canal fréquentiel 202 représente la réverbération dans le canal fréquentiel 202 du fait du mouvement du sonar.

Bien entendu, si, comme dans le procédé de l'art antérieur, on forme des voies, on peut dans une certaine mesure limiter la réverbération. On a porté sur la figure 2 une voie de réception 204 centrée sur le gisement $\theta_o$ et dont les premiers zéros du lobe principal se trouvent dans les gisements $\theta_1°$ et $\theta_2°$. Dans le cas représenté à la figure 2, les signaux récupérés sur la voie centrée sur $\theta_o$ et dans le canal fréquentiel centré sur $f_c$ reçoivent la réverbération de l'impulsion émise à la fréquence $f_0$ atténuée par les lobes secondaires du diagramme de voie.

Ainsi, il est possible de limiter dans certains canaux la réverbération de l'impulsion émise. Mais cette atténuation se révèle en pratique insuffisante compte tenu des niveaux de secondaires réalisables. Grâce au procédé d'antenne glissante décrit ci-dessus, il est possible, en commutant les signaux des transducteurs d'une antenne constituée d'une pluralité de transducteurs, de fictivement annuler la vitesse $V_A$ du porteur, pour ce qui concerne l'effet Doppler. Dans ce cas, le diagramme représenté à la figure 2 est modifié, et le spectre réverbéré n'est plus soumis à un déphasage Doppler du fait du mouvement relatif du sonar et des cellules de réverbération. Il a donc l'allure verticale représentée par les pointillés 205 de la figure 2. On a alors une réverbération dans tout gisement $\theta$ si le canal fréquentiel est centré sur une fréquence $f_c$ telle que:

$$|f_c - f_0| < 2\alpha/T$$

Cette réverbération, appelée réverbération propre, provient du fait que l'impulsion émise présente une largeur de spectre $\alpha/T$ non nulle. On évite donc la réverbération propre dans un canal fréquentiel centré sur la fréquence $f_c$ si le canal fréquentiel et le spectre d'émission sont disjoints. Ceci se traduit par une condition sur la vitesse de la cible radiale absolue de la cible, qui s'écrit:

$$(1) \qquad |V_c| \geq \alpha\lambda_o/T$$

où:

$\lambda_o$ est la longueur d'onde associée à la fréquence $f_0$.

La quantité $\alpha\lambda_o/T$ est appelée résolution Doppler, et c'est la vitesse radiale cible minimale pour avoir une bonne détection. Dans la pratique, une résolution Doppler de quelques noeuds est suffisante. Néanmoins, dans les systèmes de l'art antérieur, le choix de T, qui est dicté par les contraintes de bruit, conduit à une résolution Doppler bien inférieure. La présente invention exploite ce surdimensionnement de l'art antérieur, ce qui permet de diminuer le niveau de réverbération, tout en améliorant les caractéristiques de bruit et de résolution spatiale du sonar.

Selon la présente invention, le sonar émet une pluralité N d'impulsions à différentes fréquences $f_1, ..., f_N$. A titre d'exemple, on choisit d'émettre des impulsions de largeur spectrale identique. On choisit la fréquence minimale $f_1$ de la première impulsion compte tenu du milieu de propagation. Le choix de la largeur spectrale b/2 des impulsions émises est réalisé en fonction de la résolution Doppler souhaitée, de façon à satisfaire la relation:

$$(1) \qquad \lambda_1 b/2 \leq |V_c|$$

où:

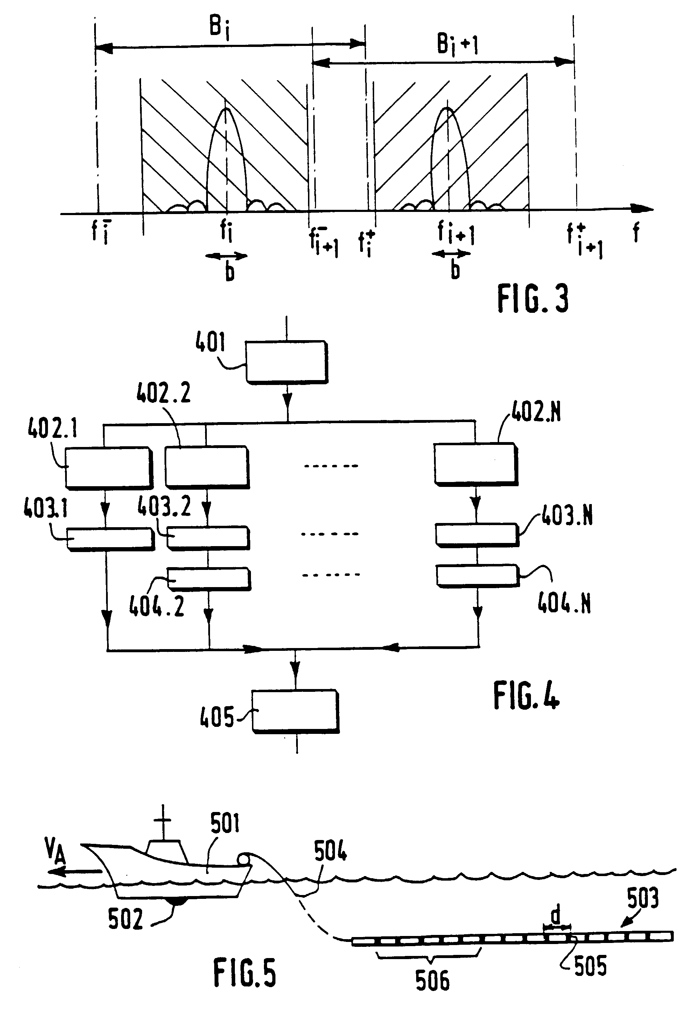

$\lambda_1$ est la longueur d'onde associée à la fréquence $f_1$. Une fois b/2 ainsi fixée, on détermine les fréquences $f_2, ..., f_N$, comme expliqué ci-dessous en référence à la figure 3, dans le cas d'un sonar animé d'une vitesse $V_A$.

On a représenté à la figure 3 le spectre de deux impulsions i et i+1 émises, centrées sur les fréquences $f_i$ et $f_{i+1}$ ($1 \leq i \leq N-1$) et présentant la largeur spectrale b/2. Les fréquences des impulsions émises par le sonar sont choisies selon l'invention de façon à ce que toute impulsion réfléchie sur une cible animée d'une vitesse extrême soit hors de la plage de réverbération propre de toute autre impulsion. En fait, le choix des fréquences selon la présente invention permet ainsi d'éviter la réverbération dans les canaux fréquentiels correspondant à une vitesse radiale de la cible comprise entre deux valeurs minimale $-V_{min}$ (cible en éloignement) et maximale $+V_{max}$ (cible en rapprochement).

De façon plus détaillée, l'impulsion **i** centrée sur la fréquence $f_i$ et de largeur de bande b/2 peut être réfléchie par des sources de réverbération fixes, et conduire ainsi à une réverbération entre les fréquences $(1-2V_A/c)(f_i-b/2)$ et $(1+2V_A/c)(f_i+b/2)$. Ces deux dernières fréquences correspondent respectivement à la réflexion de la fréquence minimale de l'impulsion $f_i-b/2$ sur une source de réverbération dans un gisement $\theta = \pi$ et à la réflexion de la fréquence maximale de l'impulsion $f_i+b/2$ sur une source dans le gisement $\theta = 0$. On a ainsi déterminé pour l'impulsion **i** une bande de réverbération, à l'intérieur de laquelle se trouve la réverbération produite par toutes les cellules de réverbération. Cette bande de réverbération est représentée par des hachures sur la figure 3. De la même façon, on détermine pour chaque impulsion 1, 2 N, une bande de réverbération.

Si l'on considère une cible animé d'une vitesse radiale comprise entre $-V_{min}$ et $+V_{max}$, on constate que cette cible réfléchit l'impulsion i+1 à une fréquence qui est supérieure à la fréquence $f_{i+1}^-$, qui vaut:

$$f_{i+1}^- = (1 - 2V_{min}/c)(1 - 2V_A/c)(f_{i+1} - b/2)$$

Cette fréquence $f_{i+1}^-$ correspond à la fréquence réfléchie dans le gisement $\theta = \pi$ par une cible en éloignement de vitesse radiale $-V_{min}$.

De même, si on considère une cible animée d'une vitesse radiale comprise entre $-V_{min}$ et $+V_{max}$, on constate que cette cible réfléchit l'impulsion i+1 à une fréquence qui est inférieure à la fréquence $f_{i+1}^+$, qui vaut:

$$f_{i+1}^+ = (1 + 2V_{max}/c)(1 + 2V_A/c)(f_{i+1} + b/2)$$

Cette fréquence $f_{i+1}^+$ correspond à la fréquence réfléchie dans le gisement $\theta = 0$ par une cible en rapprochement à la vitesse radiale $V_{max}$.

Ainsi, toute cible animée d'une vitesse radiale comprise entre $-V_{min}$ et $+V_{max}$ réfléchit l'impulsion i+1 dans une bande de fréquence $B_{i+1}$ représentée sur la figure 3, et qui est limitée par les fréquences $f_{i+1}^-$ et $f_{i+1}^+$.

Comme la bande de réverbération de l'impulsion i est comprise entre $(1 - - 2V_A/c)(fi - b/2)$ et $(1 + 2V_A/c)(fi + b/2)$, il apparaît que les fréquences des signaux de l'impulsion i+1 réfléchis par une cible sont hors de la bande de réverbération de l'impulsion **i** si:

$$(2) \qquad f_{i+1}^- \geq (1 + 2V_A/c)(f_i + b/2)$$

Réciproquement, par un calcul analogue, on trouve que les fréquences des signaux de l'impulsion **i** réfléchis par une cible sont hors de la bande de réverbération de l'impulsion i+1 si:

$$(3) \qquad f_i^+ \leq (1 - 2V_A/c)(f_{i+1} - b/2)$$

où:

$f_i^+$ est la fréquence maximale provenant de la réflexion de l'impulsion **i** sur une cible de vitesse radiale comprise entre $-V_{min}$ et $+V_{max}$, qui vaut:

$$f_i^+ = (1 + 2V_A/c)(1 + 2V_{max}/c)(f_i + b/2)$$

Les relations (2) et (3) permettent de déterminer $f_i$ et $f_{i+1}$ de sorte que l'impulsion **i** une fois réfléchie par une cible animée d'une vitesse radiale absolue comprise entre $-V_{min}$ et $+V_{max}$, soit hors de la bande de réverbération de l'impulsion i+1, et réciproquement.

Autrement dit, en référence à la figure 3, la bande de réception $B_{i+1}$ de l'impulsion i+1 est hors de la bande de réverbération de l'impulsion i, qui est hachurée; réciproquement, la bande de réception $B_i$ de l'impulsion **i** est hors de la bande de réverbération de l'impulsion i+1, qui est aussi hachurée.

A l'aide des relations (2) et (3) et compte tenu de la bande totale du sonar, on détermine le nombre N possible d'impulsions, ainsi que leurs fréquences $f_2$, $f_3$, ..., $f_N$. Ainsi, si l'on considère un canal fréquentiel quelconque, la réverbération ne peut provenir que d'une seule impulsion.

On a ainsi déterminé à partir des contraintes que représentent la bande passante du sonar et la résolution Doppler les fréquences des différentes impulsions émises par le sonar. Les différentes impulsions peuvent être émises selon l'invention simultanément ou successivement, selon les contraintes du système d'émission du sonar. Elles ont chacune typiquement une durée de T/N, où T est la durée nécessaire pour satisfaire aux contraintes liées au bruit, calculée comme dans l'art antérieur.

La durée d'émission de chaque impulsion peut être avantageusement choisie supérieure à 1/b, ce qui permet d'optimiser le rapport signal sur bruit. Dans ce cas, les impulsions sont modulées en fréquence.

La figure 4 est un schéma synoptique du traitement du signal dans un dispositif mettant en oeuvre le procédé selon l'invention. Le traitement de la figure 4 est effectué sur les signaux réfléchis, après émission d'une pluralité d'impulsions 1, 2, ..., N aux fréquences déterminées comme expliqué ci-dessus. Le traitement du signal selon l'invention comprend outre la formation de voie des étapes de détection cohérente pour chaque impulsion et de regroupement de façon incohérente des résultats obtenus lors de l'étape de détection cohérente.

En référence à la figure 4, le traitement comprend donc une première étape 401 de formation de voies, suivant les procédés connus de l'art antérieur. Après cette étape 401 de formation de voies, on effectue une étape 402.1, ..., 402.N de détection cohérente pour chaque impulsion 1, ..., N.

L'étape de détection cohérente 402.i $(1 \leq i \leq N)$ consiste à effectuer une corrélation de copies Doppler de l'impulsion **i** avec les signaux reçus dans la bande de fréquence $B_i$ correspondant aux fréquences de réflexion des signaux de l'impulsion **i** par les cibles et/ou les cellules de réverbération. Plus précisément, on a vu en référence à la figure 3 que les signaux de l'impulsion **i** étaient réfléchis à des fréquences comprises entre $f_i^-$ et $f_i^+$; on effectue la corrélation des signaux reçus dans cette bande de fréquence $B_i$ par des copies de l'impulsion i, décalés en fréquence, avec des décalages correspondant à des vitesses radiales absolues comprises entre $-V_{min}$ et $+V_{max}$.

Chacune de ces étapes de corrélation 402.i s'effectue de façon connue dans l'art antérieur. On obtient ainsi pour chaque impulsion i des signaux dans des canaux fréquentiels associés à différentes vitesses radiales possibles de la cible. Dans chaque canal fréquentiel d'une bande $B_i$, la réverbération ne peut provenir que de la réverbération éventuelle de l'impulsion **i** dont on a utilisé une copie pour la corrélation.

L'étape de regroupement de façon incohérente des résultats obtenus commence par une détection d'enveloppe dans les différents canaux fréquentiels associés aux copies Doppler. Les signaux obtenus par la corrélation des différentes copies Doppler pour chaque impulsion sont soumis à une détection d'enveloppe, qui peut avantageusement être une détection quadratique, schématisée sur la figure 4 par 403.1, ..., 403.N.

Il importe ensuite de compenser le décalage temporel éventuel des différentes impulsions. En effet, comme on l'a vu, les différentes impulsions 1, 2 N peuvent être émises en même temps ou successivement. Dans le cas où elles sont émises successivement, on compense le retard des impulsions 2, 3, ..., N par rapport à l'impulsion 1, comme schématisé par 404,2, ..., 404.N.

Une fois que les signaux de chaque canal fréquentiel ont subi la détection quadratique et ont été éventuellement retardés, on somme ceux qui correspondent à une même vitesse radiale absolue de la cible. Pour cela, pour une vitesse cible $V_R$ donnée, on somme, après détection quadratique et compensation éventuelle de retard, les signaux des canaux fréquentiels correspondant aux fréquences:

$$(1 + 2V_R/c)\ (1 + 2V_A/c)f_i$$

pour i = 1, ..., N.

Ceci revient à choisir pour chaque impulsion i, le canal fréquentiel de la bande $B_i$ correspondant au déphasage Doppler lié à la vitesse radiale cible $V_R$.

Cette étape de sommation incohérente 405 des signaux correspondant à une même vitesse cible est suivie par les traitements connus de détection, localisation et mesure de vitesse des cibles.

La présente invention est maintenant décrite en référence à la figure 5, dans le cas où elle est employée en combinaison avec le procédé connu de sous-antenne glissante. La figure 5 montre un bâtiment 501 se déplaçant par rapport à la mer et remorquant par un câble 504 une antenne linéaire 503 constituée d'une pluralité de transducteurs 505 séparés par un intervalle d. Le bâtiment 501 comprend par ailleurs une antenne d'émission 502, omnidirectionnelle et placée sous la quille du bâtiment. Le bâtiment 501 se déplace par rapport à la mer à une vitesse $V_A$.

De façon connue, on commute les signaux des transducteurs de façon à constituer une sous-antenne 506, animée d'une vitesse $2V_A$ par rapport à l'antenne physique 503, vers l'arrière de celle-ci. Ainsi, on obtient en réception les signaux d'une sous-antenne glissante 506, se déplaçant par rapport à la mer à une vitesse $-V_A$. Le déphasage Doppler lors de la réflexion sur des cibles fixes du fait du mouvement à la vitesse $V_A$ de l'émetteur 502 est compensé par le mouvement à la vitesse $-V_A$ de la sous-antenne glissante 506.

On a représenté à la figure 5 le cas où la sous-antenne glissante est constituée d'un sous-ensemble 506 de transducteurs 505. Le procédé connu consiste à déplacer ce sous-ensemble 506 vers l'arrière de l'antenne physique, ce qui peut être fait de manière incrémentale. Il est aussi possible d'interpoler les signaux des transducteurs 505 pour obtenir des transducteurs fictifs intercalés entre les transducteurs réels 505. On a décrit en référence à la figure 5 le cas où l'on sélectionne un seul sous-ensemble 506 de transducteurs pour en constituer une sous-antenne glissante. Il est bien sûr possible de constituer en même temps plusieurs sous-antennes glissantes, qui partent successivement du début de l'antenne 503, de manière étagée dans le temps. Toutes ces variantes du procédé connu sont données ici à titre d'exemples possibles, pouvant être combinés avec le procédé selon l'invention.

On combine ce procédé de formation d'une sous-antenne glissante 506 avec le procédé selon l'invention, tel que décrit par exemple en référence aux figures 3 et 4.

L'étape de formation de voies glissantes peut avantageusement être réalisée dans le procédé selon l'invention, avant la corrélation par les copies dopplerisées des impulsions 1, ..., N, c'est-à-dire en référence à la figure 4, aux étapes 402.1, ..., 402.N. De la sorte, comme on l'a vu, on est uniquement soumis à la réverbération propre, et la résolution Doppler vaut:

$$|V_d| = \lambda\ b/2$$

où:

$\lambda$   est la longueur d'onde associée à la fréquence de l'impulsion de plus petite fréquence.

Les formules de choix des fréquences des impulsions $f_1$, ..., $f_N$ Se simplifient en outre, et les formules (2) et (3) ci-dessus s'écrivent plus simplement:

$$(4) \qquad (1 - 2V_{min}/c) (f_{i+1} - b/2) \geq (f_i + b/2)$$

et

$$(5) \qquad (1 + 2V_{max}/2 ) (f_i + b/2) \leq (f_{i+1} - b/2)$$

ce qui revient à dire que toute impulsion réfléchie sur une cible animée d'une vitesse extrême est hors de la plage de fréquence correspondant à la réverbération propre de toute autre impulsion.

La combinaison du procédé selon l'invention avec ce procédé connu de sous-antenne glissante simplifie encore plus le procédé selon l'invention. De plus, cette combinaison permet de pallier les limitations du procédé de l'art antérieur.

Dans l'art antérieur, on émet en effet une impulsion de durée T. De ce fait, il faut que la sous-antenne glissante reçoive des signaux pendant une durée au moins égale à T; comme la sous-antenne glissante 506 se déplace par rapport à l'antenne réelle 503 à une vitesse $2V_A$, il ne faut pas qu'elle "sorte" de l'antenne réelle 503 pendant la durée de réception T. Autrement dit, les longueurs **L** de l'antenne réelle 503 et $L_u$ de la sous-antenne glissante 506 sont reliées par la formule:

$$L_u + 2V_A.T \leq L$$

Cette contrainte, grâce à la combinaison avec le procédé selon l'invention, devient:

$$L_u + 2V_A.\tau \leq L$$

où:

$\tau$   est la durée de la plus longue impulsion de la pluralité d'impulsions émises.

Si l'on émet successivement N impulsions de durée T/N, on forme des sous-antennes glissantes dont la longueur $L_u$ doit vérifier:

$$L_u + 2V_A.T/N \leq L$$

A titre d'exemple, on considère une antenne linéaire remorque 503 constituée de 128 transducteurs 505 espacés de d = 0,10 m. On cherche à détecter des cibles de vitesse radiale comprises entre $-V_{min}$ = -20 m/s et $V_{max}$ = +30 m/s. Pour une vitesse du sonar de 10 m/s, on forme une sous-antenne glissante constituée de 64 capteurs. On peut de façon connue, former simultanément 4 sous-antennes décalées les unes par rapport aux autres.

Selon l'invention, on émet successivement 4 impulsions de fréquences centrales $f_1$ = 5 800 Hz, $f_2$ = 6 250 Hz, $f_3$ = 6 700 Hz, $f_4$ = 7 200 Hz, de bande passante b = 13,33 Hz, et de durée $\tau$ = 0,3 s. Le produit b$\tau$ vaut 4 et on utilise une pondération d'amplitude de $\cos^2$. La résolution Doppler $b\lambda_1/2$ vaut 3,5 noeuds.

Pour mieux encore mettre en évidence les avantages de la présente invention, tels qu'on les a mentionnés ci-dessus, on peut la comparer avec les procédés de l'art antérieur. A titre d'exemple, on considère un système de l'art antérieur, émettant une impulsion unique de durée T, que l'on compare avec un système mettant en oeuvre le procédé selon l'invention, et qui émet de pluralité N d'impulsions de durée T/N se succédant. On considère des impulsions de largeur spectrale b/2.

La réverbération est améliorée selon l'invention, car, dans la bande de réception $B_i$ associée à une impulsion **i**, la réverbération ne peut provenir que de l'impulsion **i** elle-même; l'intensité moyenne de la réverbération est réduite d'un facteur bT par rapport à l'art antérieur.

Pour ce qui est de la résolution en distance, le procédé selon l'invention conduit à un choix de largeur spectrale b/2 maximum compte tenu de la contrainte de résolution doppler:

$$b\lambda/2 \leq V_c$$

De ce fait, la résolution spatiale c/2b est minimale, compte tenu du choix initial de $V_c$. Au contraire, dans l'art antérieur, T est surdimensionné et la largeur spectrale $\alpha/T$ est sous-dimensionnée, ce qui conduit à une résolution spatiale supérieure. L'amélioration apportée par l'invention est de l'ordre de bT.

Les performances contre le bruit sont aussi améliorées selon l'invention, grâce à la combinaison incohérente des détections cohérentes liées à chaque impulsion.

Enfin, l'utilisation d'impulsions de durée T/N permet selon l'invention d'augmenter la tolérance de la corrélation aux accélérations du sonar ou de la cible.

Bien entendu, la présente invention n'est pas limitée aux modes de réalisation décrits et représentés mais elle est susceptible de nombreuses variantes accessibles à l'homme de l'art sans que l'on ne s'écarte de l'esprit de l'invention.

**Revendications**

1. Procédé de détection de cible sous-marine mobile à l'aide d'un sonar actif comprenant une antenne constituée d'une pluralité de transducteurs, ledit procédé utilisant l'effet Doppler attaché au mouvement relatif de la cible et du sonar, et comprenant une étape de formation de voies à partir des signaux desdits transducteurs, caractérisé en ce que ledit sonar émet une pluralité d'impulsions à différentes fréquences, et en ce que le traitement du signal comprend, outre l'étape de formation de voies, des étapes de détection cohérente pour chaque impulsion, chaque étape consistant à effectuer une corrélation de copies Doppler de chaque impulsion émise avec les signaux reçus dans la bande de fréquence correspondant aux fréquences de réflexion des signaux de cette impulsion, pour former des canaux fréquentiels associés aux différentes vitesses radiales possibles de la cible, et une étape de regroupement de façon incohérente des résultats obtenus dans l'étape de détection cohérente consistant à sommer après détection quadratique les signaux obtenus dans chacun des différents canaux fréquentiels lors de l'étape de détection cohérente.

2. Procédé selon la revendication 1, caractérisé en ce que lesdites fréquences des impulsions sont choisies de façon à ce que toute impulsion réfléchie sur une cible animée d'une vitesse extrême est hors de la plage de fréquence correspondant à la réverbération provenant de toute autre impulsion.

3. Procédé selon la revendication 1 ou 2, caractérisé en ce que lesdites fréquences $f_0$, $f_1$,... , $f_i$, $f_{i+1}$,... ,$f_N$ des impulsions sont choisies de façon à vérifier les formules suivante:

$$(1 + 2V_A/c)(1 + 2V_{max}/c)(f_i + b/2) \leq (1 - 2V_A/c)(f_{i+1} - b/2)$$

et

$$(1 + 2V_A/c)(f_i + b/2) \leq (1 - 2V_A/c)(1-2V_{min}/c)(f_{i+1} - b/2)$$

où:

$b/2$     est la largeur spectrale des impulsions,
$V_A$     la vitesse de déplacement du sonar,
$c$     la célérité du son dans l'eau,
$V_{min}$     la valeur absolue de la vitesse radiale minimale absolue détectable d'une cible;
$V_{max}$     la vitesse radiale maximale absolue détectable d'une cible.

4. Procédé selon l'une quelconque des revendications 1 à 3, caractérisé en ce que les impulsions de la pluralité d'impulsions sont émises simultanément.

5. Procédé selon l'une quelconque des revendications 1 à 4, caractérisé en ce que les impulsions de la pluralité d'impulsions sont émises successivement.

6. Procédé selon l'une quelconque des revendications 1 à 5, caractérisé en ce que l'étape de détection cohérente consiste à effectuer une corrélation des signaux reçus sur le sonar par des copies Doppler des différentes impulsions émises, chacune des dites copies Doppler définissant un canal fréquentiel.

7. Procédé selon l'une quelconque des revendications 1 à 6, caractérisé en ce que l'étape de regroupement de façon incohérente des résultats obtenus dans l'étape de détection cohérente comprend une détection d'enveloppe, une compensation éventuelle des retards entre les impulsions émises, et une sommation des signaux des canaux fréquentiels ainsi traités et correspondant à une même vitesse radiale de la cible.

8. Procédé selon l'une quelconque des revendications 1 à 7, caractérisé en ce que la détection d'enveloppe est une détection quadratique.

9. Procédé selon l'une quelconque des revendications 1 à 8, caractérisé en ce que l'étape de formation de voies comprend la commutation des signaux des tranducteurs de ladite antenne pour obtenir au moins une sous-antenne animée d'un mouvement fictif permettant de compenser le décalage Doppler apporté aux échos fixes par un mouvement du sonar.

**Patentansprüche**

1. Verfahren zum Erfassen eines beweglichen Unterwasserziels mit Hilfe eines aktiven Sonargeräts, das eine aus mehreren Wandlern gebildete Antenne enthält, wobei das Verfahren den durch die Relativbewegung des Ziels und des Sonargeräts bedingten Doppler-Effekt ausnutzt und eine Stufe zur Bildung von Wegen anhand der Signale der Wandler enthält, dadurch gekennzeichnet, daß das Sonargerät mehrere Impulse mit unterschiedlichen Frequenzen aussendet und daß die Verarbeitung des Signals außer der Stufe der Bildung von Wegen Stufen zur kohärenten Erfassung für jeden Impuls, wovon jede darin besteht, eine Korrelation von Doppler-Kopien jedes ausgesendeten Impulses mit den Signalen auszuführen, die in dem den Reflexionsfrequenzen der Signale dieses Impulses entsprechenden Frequenzband empfangen werden, um Frequenzkanäle zu bilden, die den möglichen verschiedenen radialen Geschwindigkeiten des Ziels zugeordnet sind, sowie eine Stufe der inkohärenten Umgruppierung der in der Stufe der kohärenten Erfassung erhaltenen Ergebnisse enthält, die darin besteht, nach der quadratischen Erfassung die in jedem der verschiedenen Frequenzkanäle während der Stufe der kohärenten Erfassung erhaltenen Signale zu summieren.

2. Verfahren nach Anspruch 1, dadurch gekennzeichnet, daß die Frequenzen der Impulse in der Weise gewählt werden, daß jeder Impuls, der von einem mit einer extremen Geschwindigkeit bewegten Ziel reflektiert wird, außerhalb des Frequenzbereichs liegt, der der von jedem anderen Impuls ausgehenden Reflexion entspricht.

3. Verfahren nach Anspruch 1 oder 2, dadurch gekennzeichnet, daß die Frequenzen $f_o$, $f_1$, ..., $f_i$, $f_{i+1}$, ..., $f_N$ der Impulse in der Weise gewählt werden, daß die folgenden Formeln erfüllt werden:

$$\left(1 + \frac{2V_A}{c}\right)\left(1 + \frac{2V_{max}}{c}\right)\left(f_i + \frac{b}{2}\right) \leq \left(1 - \frac{2V_A}{c}\right)\left(f_{i+1} - \frac{b}{2}\right)$$

und

$$\left(1 + \frac{2V_A}{c}\right)\left(f_i + \frac{b}{2}\right) \leq \left(1 - \frac{2V_A}{c}\right)\left(1 - \frac{2V_{min}}{c}\right)\left(f_{i+1} - \frac{b}{2}\right)$$

wobei:

b/2     die Spektralbreite der Impulse ist,
$V_A$     die Verschiebungsgeschwindigkeit des Sonargerätes ist,
c     die Schallgeschwindigkeit in Wasser ist,
$V_{min}$     der Absolutwert der erfaßbaren absoluten minimalen radialen Geschwindigkeit eines Ziels ist,
$V_{max}$     die erfaßbare absolute maximale radiale Geschwindigkeit eines Ziels ist.

4. Verfahren nach irgendeinem der Ansprüche 1 bis 3, dadurch gekennzeichnet, daß die Impulse der mehreren Impulse gleichzeitig ausgesendet werden.

5. Verfahren nach irgendeinem der Ansprüche 1 bis 4, dadurch gekennzeichnet, daß die Impulse der mehreren Impulse nacheinander ausgesendet werden.

6. Verfahren nach irgendeinem der Ansprüche 1 bis 5, dadurch gekennzeichnet, daß die Stufe der kohärenten Erfassung darin besteht, eine Korrelation der im Sonargerät empfangenen Signale durch die Doppler-Kopien der verschiedenen ausgesendeten Impulse auszuführen, wobei jede der Doppler-Kopien einen Frequenzkanal definiert.

7. Verfahren nach irgendeinem der Ansprüche 1 bis 6, dadurch gekennzeichnet, daß die Stufe der inkohärenten Umgruppierung der in der Stufe der kohärenten Erfassung erhaltenen Ergebnisse eine Hüllkurvenerfassung, eine eventuelle Kompensation der Verzögerung zwischen den ausgesendeten Impulsen sowie eine Summierung der auf diese Weise verarbeiteten und derselben radialen Geschwindigkeit des Ziels entsprechenden Signale der Frequenzkanäle umfaßt.

**8.** Verfahren nach irgendeinem der Ansprüche 1 bis 7, dadurch gekennzeichnet, daß die Erfassung der Hüllkurve eine quadratische Erfassung ist.

**9.** Verfahren nach irgendeinem der Ansprüche 1 bis 8, dadurch gekennzeichnet, daß die Stufe der Bildung der Wege das Umschalten der Signale der Wandler der Antenne umfaßt, um wenigstens eine Unterantenne zu erhalten, die zu einer fiktiven Bewegung angetrieben wird, die die Kompensation der Doppler-Verschiebung ermöglicht, welche den festen Echos durch eine Bewegung des Sonargeräts verliehen wird.

## Claims

**1.** Method of detecting a moving underwater target using an active sonar comprising an antenna consisting of a plurality of transducers, the said method using the Doppler effect attached to the relative movement of the target and of the sonar, and comprising a stage of forming channels from the signals from the said transducers, characterized in that the said sonar emits a plurality of pulses at different frequencies, and in that the signal processing, in addition to the channel-forming stage, comprises stages of coherent detection for each pulse, each stage consisting in performing a correlation of Doppler copies of each pulse emitted with the signals received in the frequency band corresponding to the frequencies of reflection of the signals of this pulse, in order to form frequency channels associated with the various possible radial speeds of the target, and a stage of non-coherently grouping the results obtained in the coherent detection stage, consisting, after quadratic detection, in summing the signals obtained in each of the different frequency channels during the coherent detection stage.

**2.** Method according to Claim 1, characterized in that the said pulse frequencies are chosen in such a way that any pulse reflected from a target moving with extreme speed is out of the frequency range corresponding to the reverberation originating from any other pulse.

**3.** Method according to Claim 1 or 2, characterized in that the said frequencies $f_0$, $f_1$,..., $f_i$, $f_{i+1}$,..., $f_N$ of the pulses are chosen in such a way as to satisfy the following formulae:

$$(1 + 2V_A/c) (1 + 2V_{max}/c) (f_i + b/2) \leq (1 - 2V_A/c) (f_{i+1} - b/2)$$

and

$$(1 + 2V_A/c) (f_i + b/2) \leq (1 - 2V_A/c) (1-2V_{min}/c) (f_{i+1} - b/2)$$

in which:

$b/2$     is the spectral width of the pulses,
$V_A$     the speed of movement of the sonar,
$c$     the speed of sound in water,
$V_{min}$     the absolute value of the absolute minimum detectable radial speed of a target;
$V_{max}$     the absolute maximum detectable radial speed of a target.

**4.** Method according to any one of Claims 1 to 3, characterized in that the pulses of the plurality of pulses are emitted simultaneously.

**5.** Method according to any one of Claims 1 to 4, characterized in that the pulses of the plurality of pulses are emitted successively.

**6.** Method according to any one of Claims 1 to 5, characterized in that the coherent detection stage consists in performing a correlation of the signals received on the sonar with Doppler copies of the different pulses emitted, each of the said Doppler copies defining a frequency channel.

**7.** Method according to any one of Claims 1 to 6, characterized in that the stage of non-coherently grouping the results obtained in the coherent detection stage comprises envelope detection, compensation for any delays between the pulses emitted, and summing of the signals of the frequency channels thus processed and corresponding to a single radial speed of the target.

**8.** Method according to any one of Claims 1 to 7, characterized in that the envelope detection is quadratic detection.

9. Method according to any one of Claims 1 to 8, characterized in that the stage of channel formation comprises the switching of the signals from the transducers of the said antenna in order to obtain at least one subantenna given a synthetic movement making it possible to compensate for the Doppler shift imposed on the fixed echoes by movement of the sonar.

FIG.1

FIG.2

**FIG. 3**

**FIG. 4**

**FIG.5**